# EUROPÄISCHE PATENTANMELDUNG

(11) **EP 1 083 074 A2**
(43) Veröffentlichungstag der Anmeldung: **14.03.2001**
(21) Anmeldenummer: 00116744.4
(22) Anmeldetag: 03.08.2000
(51) Int. Cl.: B60K 15/04

(54) **Kraftstoffbehälter**

(30) Priorität: 10.09.1999 DE 19943260
(71) Anmelder: Mannesmann VDO AG, 60388 Frankfurt am Main (DE)
(72) Erfinder: Zapp, Thomas, Dr., 44265 Dortmund (DE)
(74) Vertreter: Rassler, Andrea, Dipl.-Phys.

(57) **Zusammenfassung**

Bei einem Kraftstoffbehälter für ein Kraftfahrzeug hat ein mit einer Tankkammer (1) verschweißtes Einfüllrohr (2) einen zur Durchtrennung vorgesehenen Abschnitt (3). An dem zur Durchtrennung vorgesehenen Abschnitt (3) schließen sich Bereiche zur Befestigung eines Verbindungsteils an. Hierdurch kann die Tankkammer (1) ohne Demontage des gesamten Einfüllrohrs (2) aus dem Kraftfahrzeug entnommen und anschließend wieder montiert werden.

## Beschreibung

Die Erfindung betrifft einen Kraftstoffbehälter mit einem an einer Tankkammer angeordneten Einfüllrohr, wobei das Einfüllrohr von der Tankkammer trennbar und mit diesem wieder verbindbar ist.

Solche Kraftstoffbehälter werden in heutigen Kraftfahrzeugen häufig eingesetzt und sind aus der Praxis bekannt. Das Einfüllrohr des aus der Praxis bekannten Kraftstoffbehälters ist über einen Formschlauch mit der Tankkammer verbunden. Bei einer Wartung beispielsweise von in der Tankkammer angeordneten Bauteilen einer Kraftstoff-Fördereinheit läßt sich die Tankkammer nach einem Lösen des Formschlauchs getrennt von dem Einfüllrohr demontieren. Das Trennen der Tankbase von dem meist sehr ausladend gestalteten Einfüllrohr hat den Vorteil, daß sich bei der Demontage der Tankkammer eine aufwendige Demontage beispielsweise der Hinterachse des Kraftfahrzeuges meist vermeiden läßt. Nachteilig bei dem bekannten Kraftstoffbehälter ist, daß Kraftstoffdämpfe durch die Verbindungsstelle des Formschlauches an dem Einfüllrohr und der Tankkammer in die Umgebung gelangen kann.

Der Erfindung liegt das Problem zugrunde, einen Kraftstoffbehälter der eingangs genannten Art so zu gestalten, daß er ein Entweichen von Kraftstoffdämpfen in die Umgebung weitgehend verhindert.

Dieses Problem wird erfindungsgemäß dadurch gelöst, daß die Tankkammer und das Einfüllrohr einstückig gefertigt oder verschweißt sind und daß die Einheit aus Einfüllrohr und Tankkammer einen zum Durchtrennen vorgesehenen Abschnitt aufweist und in den daran angrenzenden Bereichen zur Befestigung eines Verbindungsteils gestaltet ist.

Durch diese Gestaltung hat der erfindungsgemäße Kraftstoffbehälter im Neuzustand keine Verbindungsstellen zwischen der Tankkammer und dem Einfüllrohr. Die Verbindung der Einheit aus Tankkammer und Einfüllrohr kann jedoch zur Wartung des erfindungsgemäßen Kraftstoffbehälters getrennt und die Tankkammer einfach demontiert werden. Anschließend werden die Bauteile mittels eines Verbindungsteils miteinander verbunden. Im Neuzustand des Kraftstoffbehälters wird ein Entweichen von Kraftstoff aus dem Kraftstoffbehälter zuverlässig vermieden. Nach einem unwahrscheinlichen Wartungsfall hat der erfindungsgemäße Kraftstoffbehälter wie der bekannte Kraftstoffbehälter Dichtstellen an dem Verbindungsteil. Hierdurch wird ein Entweichen von Kraftstoff aus dem erfindungsgemäßen Kraftstoffbehälter weitgehend vermieden. Die einstückige Fertigung der Tankkammer mit dem Einfüllrohr kann durch deren Fertigung in einer gemeinsamen Form oder durch Verschweißen oder Verkleben erfolgen.

Ein Toleranzausgleich zwischen den getrennten Bereichen läßt sich gemäß einer anderen vorteilhaften Weiterbildung der Erfindung einfach erreichen, wenn das Verbindungsteil als Schlauchstück ausgebildet ist.

Die Einheit aus Einfüllrohr und Tankkammer läßt sich gemäß einer vorteilhaften Weiterbildung der Erfindung einfach durchtrennen, wenn die Einheit aus Einfüllrohr und Tankkammer in dem zum Durchtrennen vorgesehenen Abschnitt eine umlaufende Rille hat. Ein weiterer Vorteil dieser Gestaltung besteht darin, daß die Rille als Markierung dient und damit die Gefahr einer fehlerhaften Durchtrennung, die anschließend einen fehlerhaften Sitz des Verbindungsteils zur Folge haben kann, verringert.

Ein zuverlässiger Halt des Verbindungsteils läßt sich gemäß einer anderen vorteilhaften Weiterbildung der Erfindung einfach sicherstellen, wenn die Einheit aus Einfüllrohr und Tankkammer auf ihrer Außenseite umlaufende, radial hervorstehende Vorsprünge zur Befestigung des Verbindungsteils aufweist. Durch die Vorsprünge wird zudem die Dichtheit des Kraftstoffbehälters erhöht.

Ein Aneinanderstoßen von durch Trennung der Einheit aus Einfüllrohr und Tankkammer entstandenden Enden läßt sich gemäß einer anderen vorteilhaften Weiterbildung der Erfindung zuverlässig vermeiden, wenn die Einheit aus Einfüllrohr und Tankkammer zwei voneinander beabstandete Trennstellen hat und wenn die Trennstellen an ihren voneinander abgewandten Seiten jeweils an einen zur Befestigung des Verbindungsteils vorgesehenen Bereich angrenzen. Hierdurch überbrückt das Verbindungsteil einen aus dem Kraftstoffbehälter herausgetrennten Bereich und dient dabei als Abstandhalter und als Toleranzausgleich zwischen den Trennstellen.

Ein Toleranzausgleich zwischen der Tankkammer und dem Einfüllrohr läßt sich gemäß einer anderen vorteilhaften Weiterbildung der Erfindung einfach dadurch erzeugen, daß die Einheit aus Einfüllrohr und Tankkammer in dem zum Durchtrennen vorgesehenen Bereich einen Faltenbalg aufweist.

Eine Aneinanderreihung von elastischen, zum Ausgleich von Toleranzen vorgesehenen Mitteln läßt sich gemäß einer anderen vorteilhaften Weiterbildung der Erfindung vermeiden, wenn der Faltenbalg zwischen zwei zur Befestigung des Verbindungsteils vorgesehenen Bereichen angeordnet ist. Hierdurch hat der Kraftstoffbehälter zunächst den Faltenbalg als Toleranzausgleich. Im Wartungsfalle wird der Faltenbalg entfernt und durch das Verbindungsteil ersetzt.

Die Verbindung des von dem Verbindungsteil überbrückten Bereichs vermag gemäß einer anderen vorteilhaften Weiterbildung der Erfindung besonders hohe Zugkräfte auf zunehmen, wenn die zur Befestigung des Verbindungsteils vorgesehenen Bereiche einen umlaufenden Wulst aufweisen, und wenn das Verbindungsteil als den Wulsten entsprechend gestalteter Formschlauch ausgebildet ist.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: schematisch einen erfindungsgemäßen Kraftstoffbehälter,
- Fig.2: einen zum Durchtrennen eines Einfüllrohrs des Kraftstoffbehälters aus Figur 1 vorgesehenen Abschnitt im Längsschnitt,
- Fig.3: das Einfüllrohr aus Figur 2 nach einer Montage des Verbindungsteils,
- Fig.4: eine weitere Ausführungsform eines Einfüllrohrs,
- Fig.5: das Einfüllrohr aus Figur 4 nach einer Montage des Verbindungsteils.

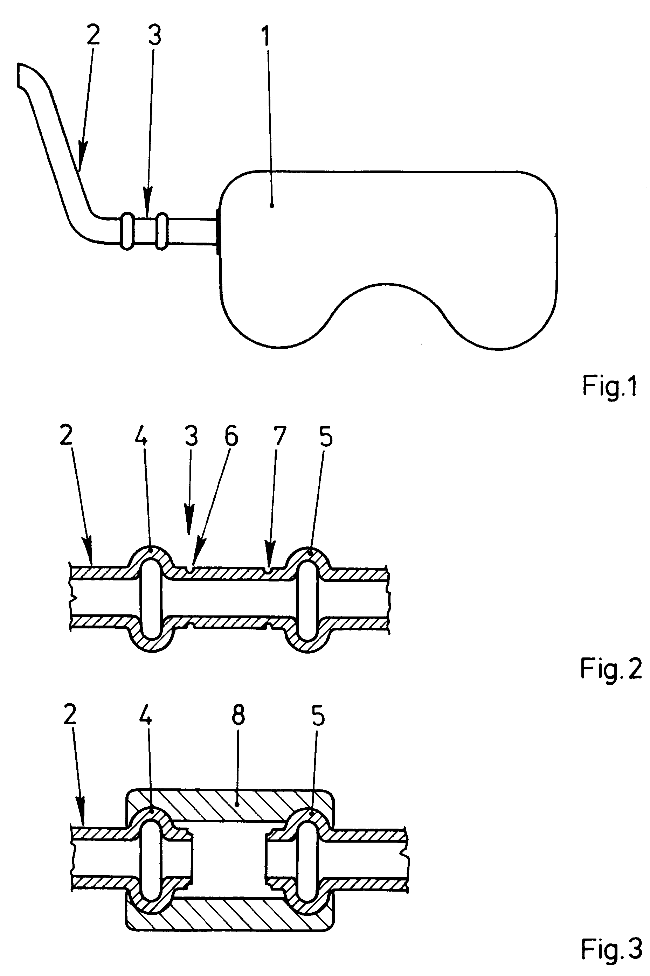

Figur 1 zeigt schematisch einen Kraftstoffbehälter mit einer Tankkammer 1 zum Sammeln von Kraftstoff und einem daran angeschweißten Einfüllrohr 2. Das Einfüllrohr 2 hat nahe der Tankkammer 1 einen zum Durchtrennen vorgesehenen Abschnitt 3.

Figur 2 zeigt das Einfüllrohr 2 in dem zum Durchtrennen vorgesehenen Abschnitt 3 im Längsschnitt. Das Einfüllrohr 2 hat zwei an dem zum Durchtrennen vorgesehenen Abschnitt 3 angrenzende Wulste 4, 5. Nahe der Wulste 4, 5 sind in dem Einfüllrohr 2 zwei Rillen 6, 7 angeordnet. Die Rillen 6, 7 dienen als Markierung beim Durchtrennen des Einfüllrohrs 2, wenn die in Figur 1 dargestellte Tankkammer 1 demontiert werden soll. Figur 3 zeigt den Abschnitt des Einfüllrohres 2 nach dem Durchtrennen im Bereich der Rillen 6, 7 und einer Montage eines Verbindungsteils 8. Das Verbindungsteil 8 ist als Formschlauch ausgebildet und hält die Wulste 4, 5 auf Abstand. Weiterhin hintergreift das Verbindungsteil 8 die Wulste 4, 5 und dichtet das Einfüllrohr 2 ab.

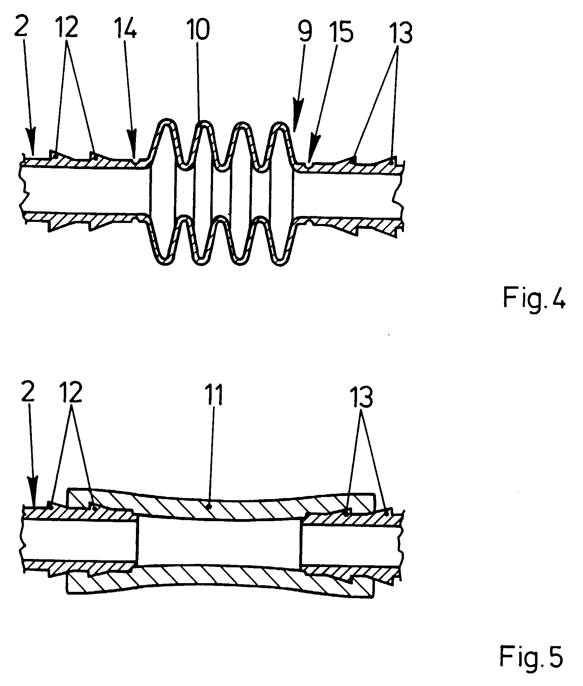

Figur 4 zeigt eine weitere Ausführungsform des Einfüllrohrs 2 mit einem zum Durchtrennen vorgesehenen Abschnitt 9 und mit einem Faltenbalg 10. Seitlich des Faltenbalges 10 sind Bereiche zur Montage eines in Figur 5 dargestellten Verbindungsteils 11 angeordnet. Die Bereiche zur Montage des hier als Schlauchstück ausgebildeten Verbindungsteils 11 weisen radial hervorstehende Vorsprünge 12, 13 auf. Die Vorsprünge 12, 13 dienen der mechanischen Befestigung des Verbindungsteils 11 und der Abdichtung des Einfüllrohrs 2. Nahe des Faltenbalgs 10 hat das Einfüllrohr 2 Rillen 14, 15 als Markierung zum Durchtrennen.

## Patentansprüche

1. Kraftstoffbehälter mit einem an einer Tankkammer angeordneten Einfüllrohr, wobei das Einfüllrohr von der Tankkammer trennbar und mit dieser wieder verbindbar ist, **dadurch gekennzeichnet**, daß die Tankkammer (1) und das Einfüllrohr (2) einstückig gefertigt oder verschweißt sind und daß die Einheit aus Einfüllrohr (2) und Tankkammer (1) einen zum Durchtrennen vorgesehenen Abschnitt (3, 9) aufweist und in den daran angrenzenden Bereichen zur Befestigung eines Verbindungsteils (8, 11) gestaltet ist

2. Kraftstoffbehälter nach Anspruch 1, **dadurch gekennzeichnet**, daß das Verbindungsteil (11) als Schlauchstück ausgebildet ist.

3. Kraftstoffbehälter nach Anspruch 1 oder 2, **dadurch gekennzeichnet**, daß die Einheit aus Einfüllrohr (2) und Tankkammer (1) in dem zum Durchtrennen vorgesehenen Abschnitt (3, 9) eine umlaufende Rille (6, 7, 14, 15) hat.

4. Kraftstoffbehälter nach zumindest einem der vorhergehenden Ansprüche, **dadurch gekennzeichnet**, daß die Einheit aus Einfüllrohr (2) und Tankkammer (1) auf ihrer Außenseite umlaufende, radial hervorstehende Vorsprünge (12, 13) zur Befestigung des Verbindungsteils (8, 11) aufweist.

5. Kraftstoffbehälter nach zumindest einem der vorhergehenden Ansprüche, **dadurch gekennzeichnet**, daß die Einheit aus Einfüllrohr (2) und Tankkammer (1) zwei voneinander beabstandete Trennstellen (Rille 6, 7, 14, 15) hat und daß die Trennstellen (Rille 6, 7, 14, 15) an ihren voneinander abgewandten Seiten jeweils an einen zur Befestigung des Verbindungsteils (8, 11) vorgesehenen Bereich angrenzen.

6. Kraftstoffbehälter nach zumindest einem der vorhergehenden Ansprüche, **dadurch gekennzeichnet**, daß die Einheit aus Einfüllrohr (2) und Tankkammer (1) in dem zum Durchtrennen vorgesehenen Bereich einen Faltenbalg (10) aufweist.

7. Kraftstoffbhälter nach zumindest einem der vorhergehenden Ansprüche, **dadurch gekennzeichnet**, daß der Faltenbalg (10) zwischen zwei zur Befestigung des Verbindungsteils (11) vorgesehenen Bereichen angeordnet ist.

8. Kraftstoffbehälter nach zumindest einem der vorhergehenden Ansprüche, **dadurch gekennzeichnet**, daß die zur Befestigung des Verbindungsteils (8) vorgesehenen Bereiche einen umlaufenden Wulst (4, 5) aufweisen, und daß das Verbindungsteil (8) als den Wulsten (4, 5) entsprechend gestalteter Formschlauch ausgebildet ist.
